# EUROPEAN PATENT SPECIFICATION

(11) **EP 1 749 679 B1**
(45) Date of publication and mention of the grant of the patent: **18.05.2011**
(21) Application number: 06014571.1
(22) Date of filing: 13.07.2006
(51) Int. Cl.: B60C 1/00, C08K 5/098, C08K 3/22, C08L 9/00

(54) **Rubber composition for tire tread**
Kautschukzusammensetzung für Reifenlaufflächen
Composition de caoutchouc pour bande de roulement de pneu

(30) Priority: 04.08.2005 JP 2005226650
(43) Date of publication of application: 07.02.2007
(73) Proprietor: Sumitomo Rubber Industries, Ltd., Hyogo-ken (JP)
(72) Inventor: Nakazono, Takeo, Chuo-ku Kobe-shi Hyogo-ken (JP); Sakamoto, Shuichi, Chuo-ku Kobe-shi Hyogo-ken (JP)
(74) Representative: Manitz, Finsterwald & Partner GbR

(56) References cited:
- EP-A- 1 258 373
- DATABASE WPI Section Ch, Week 200413 Derwent Publications Ltd., London, GB; Class A14, AN 2004-126030 XP002395201 & JP 2003 213045 A (SUMITOMO RUBBER IND LTD) 30 July 2003 (2003-07-30)

## Description

The present invention relates to a rubber composition for a tire tread.

There have been problems that a tread part of a pneumatic tire easily generates heat in accordance with vehicle running and therefore grip performance is lowered under a high temperature condition.

In order to solve these problems, it have been conventionally carried out to compound a resin having a high glass transition temperature to a rubber composition for a tire tread, and to compound an imidazole compound to a rubber composition for a tire tread, but the grip performance under a high temperature condition has not been able to be sufficiently improved.

European patent application 1 258 373 A2 discloses a rubber composition for a tire tread comprising, based on 100 parts by weight of a diene rubber, 5 to 150 parts by weight of a metallic compound as an inorganic filler, 5 to 150 parts by weight of carbon black and a silane coupling agent (D).

JP-A-2003-213045 discloses a rubber composition for a tire compounded with an organometallic compound such as magnesium methacrylate or zinc methacrylate. However, since crosslinking inhibition is caused by isolating methacrylic acid at kneading the organometallic compound, there has been a problem that the grip performance under a high temperature condition cannot be improved.

An object of the present invention is to provide a rubber composition for a tire tread with which a tire improving grip performance under a high temperature condition can be prepared.

The present invention relates to a rubber composition for a tire tread comprising (A) a diene rubber, (B) at least one kind of organometallic salt selected from the group consisting of magnesium acetate, calcium acetate, magnesium propionate and calcium propionate, and (C) as a metallic compound a metal oxide or a carbonic acid compound.

Preferably, the rubber composition for a tire tread contains as metal oxide magnesium oxide or calcium oxide.

According to a further embodiment of the present invention, the rubber composition for a tire tread contains as the carbonic acid compound calcium carbonate or magnesium carbonate.

Moreover, it is preferred that in the rubber composition for a tire tread the metallic compound contains an ionic bond and the metal ion of the organometallic salt (B) and that of the metallic compound (C) are identical.

The rubber composition for a tire tread of the present invention comprises (A) a diene rubber, (B) at least one kind of organometallic salt selected from the group consisting of magnesium acetate, calcium acetate, magnesium propionate and calcium propionate, and (C) as a metallic compound a metal oxide or a carbonic acid compound.

Examples of the diene rubber (A) are a natural rubber (NR), a styrene-butadiene rubber (SBR), a butadiene rubber (BR), an isoprene rubber (IR), a butyl rubber, an acrylonitrile-butadiene rubber (NBR), an ethylene-propylene rubber (EPDM), and a chloroprene rubber (CR). Among these, the rubber for a tire tread is preferably SBR, NR or BR, and more preferably SBR from the viewpoints of having adequate strength and showing excellent abrasion resistance.

The organometallic salt (B) is at least one selected from the group consisting of magnesium acetate, calcium acetate, magnesium propionate and calcium propionate. They do not contain a multiple bond such as a double bond as acrylate and methacrylate have. Since a multiple bond is not contained, unevenness of crosslinking can be suppressed and a crosslinking density can be improved. Among those, magnesium acetate or calcium acetate is preferable and magnesium acetate is more preferable from the viewpoint that an effect of improving tan δ at a high temperature can be obtained.

The amount of the organometallic salt (B) is preferably at least 0.1 part by weight based on 100 parts by weight of a diene rubber, and more preferably at least 1 part by weight. When the amount of the organometallic salt (B) is less than 0.1 part by weight, an effect of compounding the organometallic salt (B) tends to be hardly obtained. The amount of the organometallic salt (B) is preferably at most 20 parts by weight based on 100 parts by weight of the diene rubber, and more preferably at most 10 parts by weight. When the amount of the organometallic salt (B) exceeds 20 parts by weight, processability of the rubber tends to be deteriorated,

According to the present invention, the metallic compound (C) is a metal oxide or a carbonic acid compound.

When a metal oxide is used as the metallic compound (C), examples of the metal oxide are magnesium oxide and calcium oxide.

When a carbonic acid compound is used as the metallic compound (C), examples of the carbonic acid compound are calcium carbonate and magnesium carbonate. The carbonic acid compound produces a metal oxide according to the following formula.

CaCO₃ → CaO + CO₂

A metal oxide is particularly effective as the metallic compound (C) since it directly relates to equilibrium. The metallic compound (C) does not include the organometallic salt (B).

The metallic compound (C) contains an ionic bond. Since loss can be generated (tan δ is generated) by a higher temperature and large strain due to such an ionic bond having a bonding force stronger than that of a hydrogen bond (such as a bond between a nitrogen compound and acid), the grip performance at a high temperature can be improved. Further, change of a glass transition temperature of the rubber composition becomes small by compounding the metallic compound (C), and the danger of embrittlement fracture is lessened.

An amount of the metallic compound (C) is preferably at least 1 part by weight based on 100 parts by weight of a diene rubber and more preferably at least 3 parts by weight. When the amount of the metallic compound (C) is less than 1 part by weight, an effect of compounding the organometallic salt (B) tends to be hardly obtained. The amount of the metallic compound (C) is preferably at most 10 parts by weight based on 100 parts by weight of the diene rubber, and more preferably at most 5 parts by weight. When the amount of the metallic compound (C) exceeds 10 parts by weight, the rubber becomes hard and abrasion appearance tends to be deteriorated.

The rubber composition for a tire tread of the present invention can suppress generation of acid by containing both the organometallic salt (B) and the metallic compound (C). Thereby, crosslinking inhibition is reduced.

For example, when magnesium acetate as the organometallic salt (B) and magnesium oxide as the metallic compound (C) are both compounded, the equilibrium represented by the following formula exists:

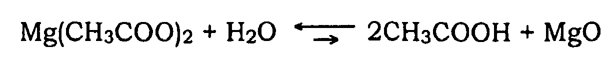

As cleared from the above-mentioned equilibrium formula, the equilibrium is easily transferred from the right to left because of the existence of MgO, decomposition of an ionic bond by heat and stimulation can be prevented, and tan δ at a high temperature can be efficiently improved.

It is particularly preferable that the metal ion of the organometallic salt (B) and that of the metallic compound (C) are identical. For example, when magnesium acetate is used as the organometallic salt (B), magnesium oxide having the identical metal ion is preferably used as the metallic compound (C).

The rubber composition for a tire tread of the present invention can decrease the amount of a basic antioxidant such as an aromatic secondary amine antioxidant, amine-ketone antioxidant, benzimidazole antioxidant, and thiourea antioxidant, which are used to suppress acid neutralization by containing the organometallic salt (B) and the metallic compound (C) so as to suppress generation of acid. Since these antioxidants have been conventionally used by substituting an oil, a grip of a tire around at a low temperature has tended to be decreased. However, an amount to be used of a softening agent such as an oil can be increased by suppressing the generation of acid as in the present invention, thereby the grip of a tire around at a low temperature can be improved, and further, the grip of a tire around at a high temperature can be also improved.

In the present invention, those generally used in the tire industry such as an aroma oil can be used as a softening agent.

The rubber composition for a tire tread of the present invention can be appropriately compounded with an additive generally used in the rubber industry, such as a reinforcing agent such as carbon black and silica, stearic acid, zinc oxide, a vulcanizing agent such as sulfur and a vulcanization accelerator, in addition to the diene rubber (A), the organometallic salt (B), the metallic compound (C) and a softening agent.

A pneumatic tire is prepared by a conventional process by using the rubber composition for a tire tread of the present invention as the tire tread. Namely, the above-described rubber composition is processed by extrusion to the shape of a tire tread part at an unvulcanized stage, and is pasted together on a tire molding machine by a conventional process to mold an unvulcanized tire. The unvulcanized tire is heated and pressurized in a vulcanizer to obtain a pneumatic tire.

### EXAMPLES

The present invention is explained in detail based on Examples but is not limited only thereto.

Various chemicals used in Examples are specifically described.
SBR: TOUGHDEN 4350 (bonded styrene content: 39 %, contained 50 parts by weight of an oil content based on 100 parts by weight of rubber solid content) available from Asahi Kasei Corporation.
Carbon black: DIABLACK A (N 110), available from Mitsubishi Chemical Corporation.
Antioxidant 6C: SANTOFLEX 13 available from Flexsis K. K.
Antioxidant 224: NOCRAC 224 available from OUCHI SHINKO CHEMICAL INDUSTRIAL CO., LTD.
Stearic acid: STEARIC ACID available from NOF Corporation.
Zinc oxide: ZINC OXIDE NO.2 available from Mitsui Mining And Smelting Co., Ltd.
Aroma oil: PROCESS X-260 available from Japan Energy Corporation Magnesium acetate: available from Kishida Chemical Co., Ltd. Magnesium oxide: KYOWAMAG available from Kyowa Chemical Industry Co., Ltd.
Sulfur: SULFUR POWDER available from Tsurumi Chemical Industry Co., Ltd.
Vulcanization accelerator: NOCCELER NS available from OUCHI SHINKO CHEMICAL INDUSTRIAL CO., LTD.

### EXAMPLES 1 and 2 and COMPARATIVE EXAMPLES 1 and 2

### (Preparation process of rubber samples of Examples 1 and 2 and Comparative Examples 1 and 2)

SBR, carbon black, an antioxidant 6C, an antioxidant 224, stearic acid, zinc oxide, aroma oil, an ionic compound and magnesium oxide were base-kneaded according to the compounding amounts shown in Table 1 until reaching 150°C for 3 minutes, and discharged at 150°C to obtain kneaded articles. Sulfur and a vulcanization accelerator were added to the kneaded articles, and the mixtures were kneaded by an open roll for about 5 minutes to obtain unvulcanized rubber compositions. Sheets were prepared with the obtained unvulcanized rubber compositions, and rubber samples of Examples 1 and 2 and Comparative Examples 1 and 2 were prepared by vulcanizing them by a specified mold at 170°C for 12 minutes. The following tests were carried out by using the obtained rubber samples.

### <Degree of crosslinking (SWELL)>

The rubber samples were extracted with toluene. A change ratio of volumes before and after extraction is called as SWELL. It is indicated that the larger the measurement value is, the larger the unevenness of crosslinking is, which is unfavorable.

### (Viscoelasticity)

Viscoelasticity (complex elastic modulus E' and loss coefficient, tan δ) at which 10 % initial strain was imparted and dynamic strain of 2 % was imparted at a frequency of 5 Hz at 100°C was measured by using a viscoelasticity spectrometer manufactured by Iwamoto Seisakusyo K. K. It is indicated that the larger the tan δ is, the larger the tire grip made is, and the grip performance is excellent.

### <Tensile test>

A test was carried out using No.3 dumbbell test samples at 70°C according to the K6251 of JIS tensile test method, and the respective values were expressed by indices referring to the value of Comparative Example 1 as 100. It is indicated that the larger the M300 (stress at 300 % elongation) is, the more the abrasion resistance property is improved.

### (Preparation process of tires of Examples 1 and 2 and Comparative Examples 1 and 2)

Sheets were prepared with the unvulcanized rubber compositions obtained in the preparation process of the rubber samples of Examples 1 and 2 and Comparative Examples 1 and 2, and cart tires with a size of 11 x 7.10-5 were prepared by vulcanizing the unvulcanized tires obtained by being pasted together in a specified shape at 170°C for 12 minutes.

The obtained cart tires were mounted on an automobile to carry out the following actual running evaluation.

### (Grip test)

The above-described tires were mounted on a cart, which ran on a course of about 2 km per a circuit by 8 rounds to evaluate a grip feeling. The grip feeling was evaluated with five points as the maximum referring to the grip feeling of Comparative Example 1 as 3 points. The initial grip was measured at the first to fourth rounds, and the latter-half grip was measured at the fifth to eighth rounds.

### (Abrasion appearance)

The above-described tires were mounted on a cart, and ran on a course of about 2 km per a circuit by 8 rounds to evaluate abrasion appearance. The abrasion appearance was relatively evaluated with five points as the maximum referring to the tire appearance of Comparative Example 1 as 3 points.

### Respective test results are shown in Table 1.

**TABLE 1**

| | | Ex. | | Com. Ex. | |
|---|---|---|---|---|---|
| | | 1 | 2 | 1 | 2 |
| Amounts (part by weight) | | | | | |
| | SBR | 150 | 150 | 150 | 150 |
| | Carbon black | 100 | 100 | 100 | 100 |
| | Antioxidant 6C | 7.5 | 2.5 | 2.5 | 7.5 |
| | Antioxidant 224 | 1.5 | 1.5 | 1.5 | 1.5 |
| | Stearic acid | 2 | 2 | 2 | 2 |
| | Zinc oxide | 4 | 4 | 4 | 4 |
| | Aroma oil | 45 | 50 | 55 | 45 |
| | Magnesium acetate | 5 | 5 | 0 | 5 |
| | Magnesium oxide | 5 | 5 | 0 | 0 |
| | Sulfur | 1 | 1 | 1 | 1 |
| | Vulcanization accelerator | 2.5 | 2.5 | 2.5 | 2.5 |

| Evaluation Result | | | | | |
|---|---|---|---|---|---|
| | SWELL | 221 | 223 | 223 | 230 |
| | Viscoelasticity | | | | |
| | E' | 3.1 | 2.9 | 3 | 2.6 |
| | tan δ | 0.36 | 0.36 | 0.31 | 0.34 |
| | Tensile test | | | | |
| | M300 | 98 | 95 | 100 | 90 |
| | Actual running evaluation | | | | |
| | Evaluation of the initial grip | 2.5 | 3 | 3 | 2.5 |
| | Evaluation of latter-half grip | 4 | 4 | 3 | 4 |
| | Abrasion appearance | 3.5 | 3 | 3 | 2.5 |

According to the present invention, a rubber composition for a tire tread capable of exhibiting excellent grip performance under a high temperature condition can be provided by suppressing crosslinking inhibition caused by acid generated at kneading the organometallic salt (B) and the metallic compound (C).

## Claims

1. A rubber composition for a tire tread, comprising:
(A) a diene rubber,
(B) at least one salt selected from the group consisting of magnesium acetate, calcium acetate, magnesium propionate and calcium propionate, and
(C) a metal oxide or a carbonic acid compound.

2. The rubber composition for a tire tread of claim 1, wherein the metal oxide is magnesium oxide or calcium oxide.

3. The rubber composition for a tire tread of claim 1, wherein the carbonic acid compound is calcium carbonate or magnesium carbonate.

4. The rubber composition for a tire tread according to any of claims 1 to 3, wherein the compound (C) contains an ionic bond and the metal ion of the salt (B) and that of the compound (C) are identical.

## Patentansprüche

1. Kautschukzusammensetzung für eine Reifenlauffläche enthaltend:
(A) einen Dienkautschuk,
(B) wenigstens ein Salz ausgewählt aus der Gruppe bestehend aus Magnesiumacetat, Calciumacetat, Magnesiumpropionat und Calciumpropionat sowie
(C) ein Metalloxid oder eine Kohlensäureverbindung.

2. Kautschukzusammensetzung für eine Reifenlauffläche nach Anspruch 1, wobei das Metalloxid Magnesiumoxid oder Calciumoxid ist.

3. Kautschukzusammensetzung für eine Reifenlauffläche nach Anspruch 1, wobei die Kohlensäureverbindung Calciumcarbonat oder Magnesiumcarbonat ist.

4. Kautschukzusammensetzung für eine Reifenlauffläche nach einem der Ansprüche 1 bis 3, wobei die Verbindung (C) eine Ionenbindung enthält und das Metallion des Salzes (B) und das der Verbindung (C) identisch sind.

## Revendications

1. Composition de caoutchouc pour une bande de roulement comprenant :
(A) un caoutchouc de diène,
(B) au moins un sel choisi dans le groupe constitué de l'acétate de magnésium, de l'acétate de calcium, du propionate de magnésium et du propionate de calcium, et
(C) un oxyde métallique ou un composé d'acide carbonique.

2. Composition de caoutchouc pour une bande de roulement selon la revendication 1, dans laquelle l'oxyde métallique est l'oxyde de magnésium ou l'oxyde de calcium.

3. Composition de caoutchouc pour une bande de roulement selon la revendication 1, dans laquelle le composé d'acide carbonique est le carbonate de calcium ou le carbonate de magnésium.

4. Composition de caoutchouc pour une bande de roulement selon l'une quelconque des revendications 1 à 3, dans laquelle le composé (C) contient une liaison ionique et l'ion métallique du sel (B) et celui du composé (C) sont identiques.
